# EUROPÄISCHE PATENTSCHRIFT

(11) **EP 1 353 099 B1**
(45) Veröffentlichungstag und Bekanntmachung des Hinweises auf die Patenterteilung: **05.07.2006**
(21) Anmeldenummer: 03007725.9
(22) Anmeldetag: 04.04.2003
(51) Int. Cl.: F16J 15/34

(54) **Gleitringdichtung mit Verdrehsicherung**
Mechanical seal with anti-rotation feature
Garniture mécanique d'étanchéité avec dispositif d'arrêt en rotation

(30) Priorität: 12.04.2002 DE 10216140
(43) Veröffentlichungstag der Anmeldung: 15.10.2003
(73) Patentinhaber: Federal-Mogul Friedberg GmbH, 86316 Friedberg (DE)
(72) Erfinder: Zutz, Hans-Henning, 42929 Wermelskirchen (DE)

(56) Entgegenhaltungen:
- EP-A- 0 005 159
- DE-A- 1 650 024
- US-A- 3 279 804

## Beschreibung

Die Erfindung beschreibt eine Gleitringdichtung, insbesondere Laufwerkdichtung, umfassend einen winkelförmigen Gleit- und Gegenring, die mit Ihren radialen Dichtschenkeln eine Dichtfläche bilden, und aus elastomerem Werkstoff bestehenden, trapezförmigen Dichtkörpern, die zwischen dem, die Gleitringdichtung aufnehmenden Gehäuse und der radial äußeren Oberfläche der axialen Schenkel des Gleit- und Gegenringes angeordnet sind, wobei die trapezförmigen Dichtkörper mit einem metallischen Versteifungsring ausgestattet sind und der Dichtkörper einen Versteifungsring besitzt, der in dem radial inneren Ende des trapezförmigen Dichtkörper angeordnet ist wobei die Verbindung zwischen Dichtkörper und radial äußerer Oberfläche der axialen Schenkel des Gleit- und Gegenringes als Preßsitz toleriert ist.

Laufwerkdichtungen als spezielle Ausführung von Gleitringdichtungen kommen dann zum Einsatz wenn es betriebsbedingt zu starken Verschmutzungen an den Aggregaten, Maschinen oder Anlagen kommen kann.

Es ist allgemein bekannt, zwischen den radial äußeren Oberflächen der axialen Schenkel der Gleit- bzw. Gegenringe und dem die Laufwerkdichtung aufnehmenden Gehäuse Dichtungskörper aus elastischem Werkstoff, wie z. B. aus Gummi, vorzusehen, die außer der Funktion des Abdichtens auch gleichzeitig die Funktion der Drehmomentübertragung und der axialen Dichtpressung übernehmen.

Die Drehmomente in einer gattungsgemäßen Laufwerkdichtung werden dabei von den Gleitflächen über die axialen Schenkel der Gleit- und Gegenringe und die Dichtkörper auf das Gehäuse übertragen. Damit die Drehmomente von den axialen Schenkeln der Gleit- und Gegenringe auf die Dichtkörper übertragen werden können, muß an dieser Verbindungsstelle eine ausreichende Haftreibung vorhanden sein. Dabei kann die Kraft, die von den Dichtkörpern auf die Gleit- und Gegenringe ausgeübt wird, u. a. über die Schrägstellung und die Abmaße der trapezförmigen Dichtkörper gesteuert werden.

Um einen gezielten Einfluß auf den Kraftfluß im Dichtkörper zu erlangen, wird in der DE OS 16 50 024 vorgeschlagen, einen metallischen Federungskörper in den Dichtkörper zu integrieren. Hierbei soll ein loser zwischen Gleitring und Maschinengehäuse einzulegender Dichtkörper geschaffen werden, der bei einfachster Gestaltung eine verhältnismäßig große Axialbewegung des Gleitringes zuläßt, ohne dabei den drehfesten Kontakt sowohl am Gleitringrücken als auch am Maschinengehäuse zu verlieren.
Durch eine solche Einbindung eines Federungskörpers wird erreicht, dass bei axialer Verschiebung des Gleitringes der Dichtkörper sowohl auf Druck als auch auf Biegung, im Gegensatz zur üblichen Schubbeanspruchung bei den bekannten Dichtkörpern, beansprucht wird.
Bei dieser Lösung wird zwar der Kraftfluß im Dichtkörper gezielt beeinflusst, ein Kippen des Dichtkörpers kann aber nicht verhindert werden. So dass es insbesondere am Gleitringrücken zu einer verminderten Auflage des Dichtkörpers und somit zu einer verminderten Haftreibung und zu niedrigeren übertragbaren Drehmomenten kommen kann. Gleichzeitig können, im Falle des Kippens des Dichtkörpers, Verunreinigungen und Schmiermittel unter den Dichtkörper gelangen, was zu einer dauerhaften Beeinträchtigung des Kraftflusses führen kann.

In der US 3,279,804 wird vorgeschlagen, als Versteifungsringe metallische Stanzteile an das radial äußere Ende des Dichtkörpers anzubinden, so dass es zu einer starren Anbindung des Dichtkörpers an das Gehäuse kommt. Ein Kippen des Dichtkörpers am radial äußeren Ende wäre somit ausgeschlossen. Die Druckschrift offenbart weiterhin, die Anbindung eines S-förmig gebogenen Stanzteiles, an das radial äußere Ende des Dichtkörpers. Bei dieser Lösung steht lediglich ein Schenkel des Stanzteiles mit dem Gehäuse in Kontakt, der andere Schenkel ist vom Gehäuse beabstandet und mit einem elastomeren Werkstoff beaufschlagt, so dass es zu einer Abdichtung zwischen Stanzteil und Gehäuse kommt.
Eine Abdichtung ist hierbei aber nur bedingt möglich, da ein Schenkel des metallischen, kreisförmigen Stanzteiles unmittelbar mit dem Gehäuse in Verbindung steht, gibt das Stanzteil den Sitz des Dichtkörpers im Gehäuse vor. Um eine Dichtheit am Gehäuse durch den am anderen Schenkelende befindlichen elastomeren Werkstoff zu erlangen, muß dieser über das radial äußere Ende des Stanzteiles hinausragen. Da gummielastische Werkstoffe aber nahezu inkompressibel sind, wird der gummielastische Werkstoff bei der Montage aber so stark deformiert, dass er beschädigt oder sogar zerstört werden kann.
Da der gummielastische Werkstoff über den Versteifungsring hinausragt und der Versteifungsring nicht elastisch ist, kann es zu Schwierigkeiten beim Einfügen der Gleitringdichtung in das Gehäuse kommen. Der Einsatz von Montagehilfen oder Vorrichtungen ist dabei kostenintensiv und zeitaufwendig.
Ein weiterer Nachteil ist die starre Anbindung des Dichtkörpers an den Versteifungsring. Radiale und axiale Verschiebung der Gleitringe führen zu Zugspannungen, die an den axial äußeren Oberflächen der Dichtkörper am größten sind. Eine starre Anbindung an den Versteifungsring führt somit an den äußeren Oberflächen der Dichtkörper zu Spannungsspitzen, die zu einem Lösen der Verbindung zwischen Versteifungsring und Dichtkörper führen kann.

Die Anbindung des Dichtkörpers über einen Versteifungsring an das Gehäuse bedingt weiterhin, dass hier ein großes Drehmoment übertragen werden kann. Dies stellt in Bezug auf den Kraftfluß wiederum einen Nachteil dar, da die größten Umfangskräfte an der radial äußeren Oberfläche der Gleit- bzw. Gegenringe auftreten.
Aus der EP 0005159 A ist eine Gleitringdichtung zu entnehmen bei der ein Dichtkörper an seinem Innenumfang einen wellenförmigen Profilquerschnitt aufweist. Bei dieser Art von Gleitringdichtungen sind keine Zugbeanspruchungen gegeben, sodass auf eine Zugentlastung verzichtet werden kann.

Es ist daher Aufgabe der Erfindung die oben genannten Nachteile zu überwinden und eine Gleitringdichtung zu entwickeln, die eine optimale Anbindung an den Gleitring und damit eine sichere Übertragung des Drehmoments gewährleistet und mit der die auftretenden Zugspannungen im trapezförmigen Dichtkörper gezielt beeinflusst werden können und die keinen zusätzlichen Bauraum benötigt.

Diese Aufgabe wird erfindungsgemäß durch die Merkmale des Patentanspruchs 1 gelöst, vorteilhafte Weiterbildungen der Erfindung sind in den Unteransprüchen dokumentiert.

Durch die erfindungsgemäße Ausgestaltung des Dichtkörpers ist es nun möglich, eine optimale Anbindung des Dichtkörpers an den Gleitring und damit eine sichere Übertragung des Drehmomentes zu gewährleisten. Dabei bietet das wellenförmige, elastomere Dichtungsprofil einerseits die Möglichkeit einer leichten Montage und andererseits wird durch das Wellenprofil gewährleistet, dass der elastomere Werkstoff nicht überansprucht wird. Eine Überanspruchung kann nicht erfolgen, weil der überschüssige, elastomere Werkstoff bei der Montage in die Wellentäler ausweichen kann.

Die Bemaßung zwischen der radial inneren Oberfläche des Dichtkörpers und der radial äußeren Oberfläche der Gleit- und Gegenringe ist als Presspassung ausgeführt. Es besteht daher keine lose Verbindung, sondern die Bauteile werden kraftschlüssig zusammengehalten. Somit stehen, neben der aus den Abmaßen und der Schrägstellung der Dichtkörper aufgebrachten Kräften, weitere Kräfte zu Verfügung, welche die Haftreibung erhöhen und die eine optimale Übertragung der Drehmomente unterstützen. So können selbst größte Drehmomente, wie sie z. B. bei einem Verkleben der Gleitflächen durch Schmutz oder Korrosion entstehen, übertragen werden.
Ein weiterer erfindungsgemäßer Vorteil ergibt sich durch die Presspassung dahingehend, dass die Bauteile während der Montage nicht auseinanderfallen können und dass kein Verschieben des Dichtkörpers, bei sich auf dem Gleitring aufbauendem Schmutz, erfolgen kann.

Im Gegensatz zur radialen Höhe der trapezförmigen Dichtkörper ist die Höhe des elastomeren Dichtprofils gering und liegt im Bereich von etwa einem bis zu wenigen Millimetern. Durch die geringe Höhe des wellenförmigen Dichtungsprofils unterliegt der Dichtkörper auch nur einem geringen Setzen, was sich wiederum positiv auf das Wartungsverhalten und die Übertragung des Drehmomentes auswirkt.

Durch die erfindungsgemäße Einbringung des Versteifungsringes in den Dichtkörper an der radial inneren Umfangsoberfläche des Dichtkörpers, ist ein Vertwisten des Dichtkörpers am Innenumfang nun nicht mehr möglich. Aus diesem Grund kann sich der Dichtkörper nicht vom Gleitring abheben und es können weder Verunreinigungen noch Schmierstoffe unter den Dichtkörper gelangen.

Durch die axialen und radialen Bewegungen der Gleit- bzw. Gegenringe kommt es u. a. zu Zugspannungen in den Dichtkörpern. Diese Zugspannungen erreichen an den äußeren Oberflächen der Dichtkörper ihr Maximum. So dass die Verbindung zwischen Dichtkörper und Versteifungsring an diesen Stellen maximal belastet werden. Um diese Belastungen zu minimieren und/oder umzulenken wird in diesen Bereichen im Dichtkörper eine Zugentlastung ausgebildet. Die Zugentlastung wird in Form einer hohlkehlenförmigen Hinterschneidung unmittelbar im Anbindungsbereich zwischen elastomerem Werkstoff und Versteifungsring an den Dichtkörper angeformt.

In einer weiteren Ausgestaltungsform der Erfindung wird vorgeschlagen, die äußeren Umfangsoberflächen der axialen Schenkel der Gleit- und Gegenringe leicht konisch auszuführen. Durch die leicht konische Ausbildung wird die Montage erleichtert, wobei die Verbindung aber stets als Preßsitz ausgeführt bleibt.
Der konischen Ausbildung der Gleit- und Gegenringe folgt der Dichtkörper dadurch, dass der elastomere Werkstoff, mit der wellenförmigen Profilierung, am inneren Umfang des Versteifungsringes ebenfalls konisch ausgebildet ist, so dass sich die Oberflächen der Bauteile beim Fügen stets parallel gegenüber stehen.

Je nach mechanischer Belastung der Gleitringdichtung kann es erforderlich sein, hohe Momente an das Gehäuse zu übertragen. Für diesen Fall wird in der Erfindung vorgeschlagen, einen weiteren Versteifungsring in den Dichtkörper zu integrieren. Dieser Versteifungsring wird erfindungsgemäß in das radial äußere Ende des Dichtkörpers eingebracht und besitzt ebenfalls, auf seiner dem Gehäuse zugewandten Seite, ein wellenförmiges Dichtungsprofil. Bezogen auf die Passungsmaße ist diese Verbindung auch als Presspassung ausgeführt. Wie an dem radial inneren Versteifungsring ist auch hier eine Zugentlastung in Form einer Hinterschneidung anformbar.

Fertigungsbedingt wird der Versteifungsring während des Formfüllens mehr oder weniger großen Drücken ausgesetzt. Gleichzeitig muß der flüssige, elastomere Werkstoff um den Versteifungsring herumfließen, was wiederum zur Deformation des Versteifungsringes führen könnte. Daher wird in der Erfindung vorgeschlagen, den Versteifungsring mit Öffnungen zu versehen, so dass der flüssige, elastomere Werkstoff während des Formfüllens durch den Versteifungsring fließen kann.

Die erfindungsgemäße Integration eines Versteifungsringes in den Dichtkörper ist für die Art von Laufwerkdichtungen vorgesehen, bei denen baugrößenbedingt eine formschlüssige Drehmomentübertragung fertigungstechnisch nur aufwendig zu realisieren ist.

Erfindungsgemäße Gestaltungsbeispiele einer Laufwerkdichtung sind nachstehend anhand von Zeichnungen und im weiteren in der Beschreibung näher erläutert. Es zeigen:
Figur 1 einen Schnitt durch ein erfindungsgemäßes Ausführungsbeispiel eines Dichtkörpers für eine Gleitringdichtung mit einem Versteifungsring, einer Zugentlastung und einem wellenförmigen Dichtungsprofil.
Figur 2 einen Schnitt durch ein erfindungsgemäßes Ausführungsbeispiel eines Dichtkörpers für eine Gleitringdichtung mit jeweils einem Versteifungsring an der radial inneren und der äußeren Umfangsoberfläche, jeweils einer Zugentlastung und mit jeweils einem wellenförmigen Dichtungsprofil.
Figur 3 einen Schnitt durch ein erfindungsgemäßes Ausführungsbeispiel einer Gleitring- bzw. Laufwerkdichtung im eingebauten Zustand.

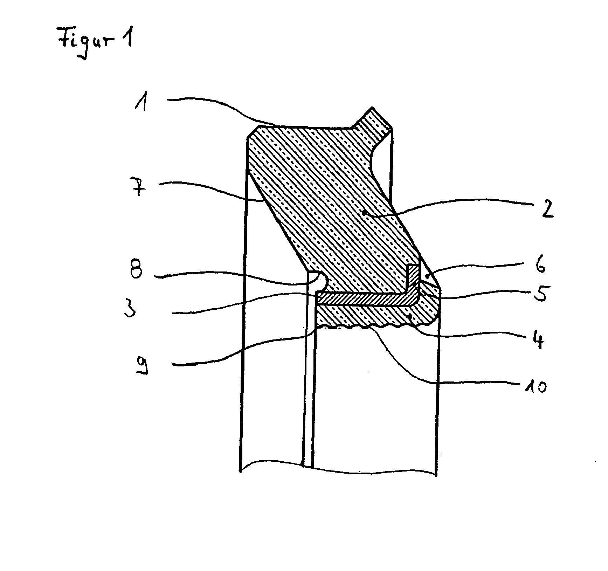

Figur 1 zeigt den Schnitt durch einen erfindungsgemäßen Dichtkörper 1 für eine Gleitringdichtung, umfassend einen trapezförmigen Dichtkörper 2, einen Versteifungsring 3 und ein wellenförmiges Dichtungsprofil 4.
Der Versteifungsring 3 ist fertigungsbedingt L-förmig ausgeführt, dabei ist der kurze Schenkel nach radial außen gerichtet. Um den Versteifungsring 3 während des Forrnfüllens in seiner Position zu halten, sind in den Dichtkörper 1 Kerben 6 eingelassen.
Auf der axial äußeren Seite 7 des Dichtkörpers 1 ist eine Zugentlastung 8 angeformt. Die Zugentlastung 8 ist in diesem Ausführungsbeispiel als etwa kreisförmige Hinterschneidung ausgeführt.
An der radial inneren Umfangsoberfläche 9 des Dichtkörpers 1 ist ein weiteres Dichtungsprofil 4 angeformt. Die Oberfläche ist dabei wellenförmig 10 ausgebildet und kann je nach Gleit- bzw. Gegenring auch konisch ausgeführt sein.

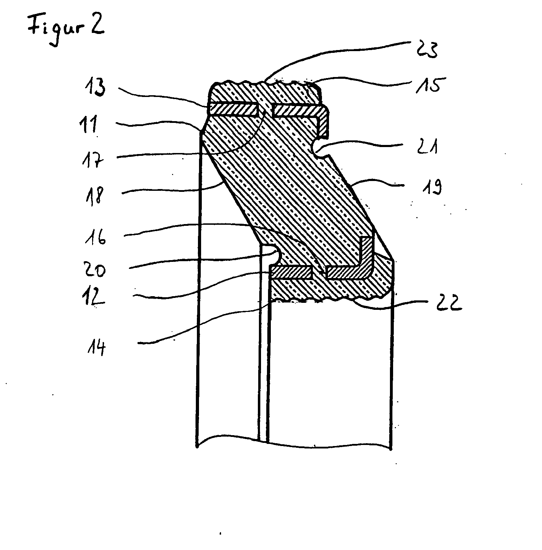

In der Figur 2 ist der Schnitt durch einen Dichtkörper 11 für eine Gleitringdichtung mit jeweils einem Versteifungsring 12, 13 an der radial inneren 14 und der äußeren 15 Umfangsoberfläche dargestellt. Die Versteifungsringe 12, 13 besitzen Öffnungen 16, 17, die in Form von regelmäßigen oder unregelmäßig angeordneten Löchern in den Versteifungsringen 12, 13 enthalten sein können. Dabei können die Versteifungsringe 12, 13 auch aus Lochblechen gefertigt werden.
In die axial äußeren Oberflächen 18, 19 des Dichtkörpers 11 sind Zugentlastungen 20, 21 eingelassen. An die radialen Enden 14, 15 des Dichtkörpers 11 sind wellenförmige Dichtprofile 22, 23 angeformt, die auch konisch verlaufen können.

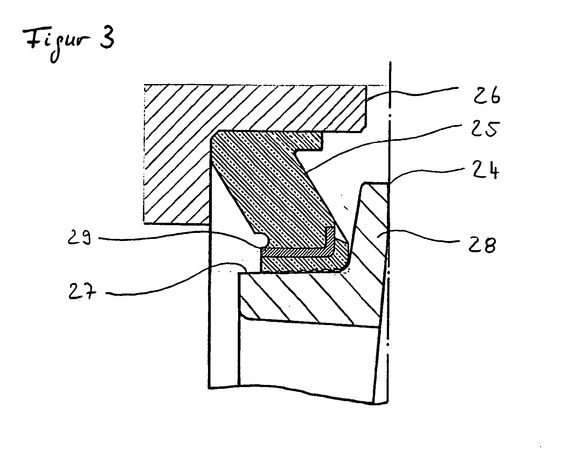

Figur 3 zeigt den Schnitt durch eine Laufwerkdichtung 24, die mittels eines trapezförmigen Dichtkörpers 25 in einem Gehäuse 26 montiert ist. Auf der radialen Oberfläche 27 des Gleit- bzw. Gegenringes 28 ist der Dichtkörper 25 mittels eines Versteifungsringes 29 fixiert.

## Patentansprüche

1. Gleitringdichtung, insbesondere Laufwerkdichtung (24), umfassend einen winkelförmigen Gleit- und Gegenring (28), die mit Ihren radialen Dichtschenkeln eine Dichtfläche bilden, und aus elastomerem Werkstoff bestehenden, trapezförmigen Dichtkörpern (1, 11, 25), die zwischen dem, die Gleitringdichtung aufnehmenden Gehäuse (26) und der radial äußeren Oberfläche der axialen Schenkel (27) des Gleit- und Gegenringes angeordnet sind, wobei die trapezförmigen Dichtkörper (1, 11, 25) mit einem metallischen Versteifungsring (3, 12, 13, 29) ausgestattet sind und der Dichtkörper (1, 11, 25) einen Versteifungsring (3, 12, 29) besitzt, der in dem radial inneren Ende des trapezförmigen Dichtkörper (1,11,25) angeordnet ist wobei die Verbindung zwischen Dichtkörper (1, 11, 25) und radial äußerer Oberfläche der axialen Schenkel (27) des Gleit- und Gegenringes als Preßsitz toleriert ist, **dadurch gekennzeichnet, dass** an dem Versteifungsring (3, 12, 29), in Richtung der radial äußeren Oberflächen der axialen Schenkel des Gleit- und Gegenringes, ein wellenförmiges, elastomeres Dichtungsprofil (4, 22, 23) angeformt ist und dass am axial äußeren Ende (7) des trapezförmigen Dichtkörpers (1,11,25), unmittelbar oberhalb der radial äußeren Oberfläche des Versteifungsringes (3, 12, 29), eine Zugentlastung (8, 20), in Form einer Hinterschneidung, insbesondere als Radius, ausgebildet ist.

2. Gleitringdichtung nach Anspruch 1, **dadurch gekennzeichnet, dass** sich der Durchmesser der radial äußeren Oberfläche der axialen Schenkel des Gleit- und Gegenringes zum axial äußeren Ende hin verringert, so dass eine leicht konische Verbindung zwischen Dichtkörper (1) und Gleit- bzw. Gegenring gebildet ist.

3. Gleitringdichtung nach einem der Ansprüche 1 bis 2, **dadurch gekennzeichnet, dass** in dem radial äußere Ende des trapezförmigen Dichtkörpers (11), an dem die Gleitringdichtung aufnehmenden Gehäuse, ein weiterer Versteifungsring (13) vorgesehen ist, an dessen radial äußerer Oberfläche ein wellenförmiges Dichtungsprofil (23) vorgesehen ist und dass die Verbindung zwischen radial äußerer Oberfläche des wellenförmiges Dichtungsprofils (23) und Gehäuse als Preßsitz toleriert ist.

4. Gleitringdichtung nach Anspruch 3, **dadurch gekennzeichnet, dass** am axial inneren Ende (19) des trapezförmigen Dichtkörpers (11) unmittelbar unterhalb des radialen Endes des Versteifungsringes (13) eine Zugentlastung (21), in Form einer Hinterschneidung, insbesondere als Radius, ausgebildet ist.

5. Gleitringdichtung nach einem der Ansprüche 1 bis 4, **dadurch gekennzeichnet, dass** in dem Versteifungsring (3, 12, 13, 29) Öffnungen (16, 17) vorgesehen sind, so dass eine Verbindung zwischen wellenförmigem Dichtungsprofil (4, 22, 23) und trapezförmigem Dichtungskörper (1, 11, 25) gegeben ist.

## Claims

1. Mechanical seal, especially a mechanism seal (24), comprising an angular slide ring and interacting ring (28) which form a sealing face with their radial sealing legs, and trapezoid sealing bodies (1, 11, 25) which are formed from an elastomeric material and arranged between the housing (26) receiving the mechanical seal and the radially outer surface of the axial legs (27) of the slide ring and interacting ring, the trapezoid sealing bodies (1, 11, 25) being equipped with a metal reinforcing ring (3, 12, 13, 29) and the sealing body (1, 11, 25) having a reinforcing ring (3, 12, 29) which is arranged in the radially inner end of the trapezoid sealing body (1, 11, 25), the connection between the sealing body (1, 11, 25) and the radially outer surface of the axial legs (27) of the slide ring and interacting ring being tolerated as a press-fit, **characterised in that** an undulating, elastomeric profiled joint (4, 22, 23) is formed on the reinforcing ring (3, 12, 29) in the direction of the radially outer surfaces of the axial legs of the slide ring and interacting ring, and **in that** a strain relief (8, 20) in the form of an undercut, especially as a radius, is formed at the axially outer end (7) of the trapezoid sealing body (1, 11, 25) directly above the radially outer surface of the reinforcing ring (3, 12, 29).

2. Mechanical seal according to claim 1, **characterised in that** the diameter of the radially outer surface of the axial legs of the slide ring and interacting ring tapers toward the axially outer end, such that a slightly conical connection is formed between the sealing body (1) and the slide ring or interacting ring.

3. Mechanical seal according to one of claims 1 to 2, **characterised in that** in the radially outer end of the trapezoid sealing body (11), on the housing receiving the mechanical seal, is provided a further reinforcing ring (13), on the radially outer surface of which an undulating profiled joint (23) is provided, and **in that** the connection between the radially outer surface of the undulating profiled joint (23) and the housing is tolerated as a press-fit.

4. Mechanical seal according to claim 3, **characterised in that** a strain relief (21), in the form of an undercut, especially as a radius, is formed at the axially inner end (19) of the trapezoid sealing body (11) directly below the radial end of the reinforcing ring (13).

5. Mechanical seal according to one of claims 1 to 4, **characterised in that** apertures (16, 17) are provided in the reinforcing ring (3, 12, 13, 29), such that a connection is provided between the undulating profiled joint (4, 22, 23) and the trapezoid sealing body (1, 11, 25).

## Revendications

1. Garniture mécanique d'étanchéité à anneau de glissement, en particulier garniture d'étanchéité pour mécanisme de roulement (24), comportant une bague de glissement et de butée (28) de forme angulaire, dont les branches d'étanchéité radiales forment une surface d'étanchéité, et des corps d'étanchéité (1, 11, 25) de forme trapézoïdale réalisés dans un matériau élastomère, qui sont agencés entre le carter (26) recevant la garniture mécanique d'étanchéité et la surface radialement extérieure des branches (27) axiales de la bague de glissement et de butée, les corps d'étanchéité (1, 11, 25) trapézoïdaux étant munis d'une frette (3, 12, 13, 29) métallique et le corps d'étanchéité (1, 11, 25) comportant une frette métallique (3, 12, 29) qui est agencée dans l'extrémité radialement intérieure du corps d'étanchéité (1, 11, 25) trapézoïdal, la liaison entre le corps d'étanchéité (1, 11, 25) et la surface radialement extérieure des branches (27) axiales de la bague de glissement et de butée étant tolérée sous la forme d'un ajustement serré, **caractérisée en ce qu'**un profil d'étanchéité (4, 22, 23) élastomère de forme ondulée est agencé sur la frette (3, 12, 29) en direction des surfaces radialement extérieures des branches axiales de la bague de glissement et de butée et **en ce qu'**une décharge de traction (8, 20) en forme de contre-dépouille, en particulier en forme de rayon, est réalisée sur l'extrémité radialement extérieure (7) du corps d'étanchéité (1, 11, 25) trapézoïdal, directement au-dessus de la surface radialement extérieure de la frette (3, 12, 29).

2. Garniture mécanique d'étanchéité selon la revendication 1, **caractérisée en ce que** le diamètre de la surface radialement extérieure des branches axiales de la bague de glissement et de butée diminue vers l'extrémité radialement extérieure, de telle sorte qu'il se forme une liaison légèrement conique entre le corps d'étanchéité (1) et la bague de glissement et de butée.

3. Garniture mécanique d'étanchéité selon l'une quelconque des revendications 1 à 2, **caractérisée en ce que**, dans l'extrémité radialement extérieure du corps d'étanchéité (11) trapézoïdal, au niveau du carter recevant la garniture mécanique d'étanchéité, est prévue une frette (13) supplémentaire, sur la surface radialement extérieure de laquelle, est prévu un profil d'étanchéité (23) de forme ondulée et **en ce que** la liaison entre la surface radialement extérieure du profil d'étanchéité (23) et le carter est tolérée sous forme d'ajustement serré.

4. Garniture mécanique d'étanchéité selon la revendication 3, **caractérisée en ce que**, sur l'extrémité radialement intérieure (19) du corps d'étanchéité (11) trapézoïdal, directement en dessous de l'extrémité radiale de la frette (13), est réalisée une décharge de traction (21) en forme de contre-dépouille, en particulier en forme de rayon.

5. Garniture mécanique d'étanchéité selon l'une quelconque des revendications 1 à 4, **caractérisée en ce que** des orifices (16, 17) sont prévus dans la frette (3, 12, 13, 29), de telle sorte qu'une liaison est formée entre le profil d'étanchéité (4, 22, 23) de forme ondulée et le corps d'étanchéité (1, 11, 25) de forme trapézoïdale.
